(19) Europäisches Patentamt
European Patent Office
Office européen des brevets

(11) Veröffentlichungsnummer: **0 054 143**
**B1**

# (12) EUROPÄISCHE PATENTSCHRIFT

(45) Veröffentlichungstag der Patentschrift: **27.06.84**

(51) Int. Cl.³: **C 10 M 1/08**, E 21 B 41/02

(21) Anmeldenummer: **81108704.8**

(22) Anmeldetag: **22.10.81**

## (54) Verwendung von Polyhydroxy-polyalkylen-polyamin-Salzen von Maleinamidsäuren als Korrosionsschutzmittel in Wasser-in-Öl-Emulsionen.

(30) Priorität: **16.12.80 DE 3047304**

(43) Veröffentlichungstag der Anmeldung: **23.06.82 Patentblatt 82/25**

(45) Bekanntmachung des Hinweises auf die Patenterteilung: **27.06.84 Patentblatt 84/26**

(84) Benannte Vertragsstaaten: **BE DE FR GB IT NL**

(56) Entgegenhaltungen:
**BE - A - 689 340**
**DE - A - 1 521 710**
**FR - A - 1 214 872**
**FR - A - 2 427 400**
**US - A - 4 238 349**

(73) Patentinhaber: **BASF Aktiengesellschaft, Carl-Bosch-Strasse 38, D-6700 Ludwigshafen (DE)**

(72) Erfinder: **Oppenlaender, Knut, Dr., Otto-Dill-Strasse 23, D-6700 Ludwigshafen (DE)**
Erfinder: **Schwartz, Erich, Dr., Mohnstrasse 37, D-6700 Ludwigshafen (DE)**
Erfinder: **Barthold, Klaus, Dr., Paulusbergstrasse 4, D-6800 Mannheim (DE)**
Erfinder: **Slotmann, Wilhelmus, c/o Behn, Meyer & Co. (Pte) Ltd. (V) P.O. Box 2000, Singapore 5 (SG)**

**EP 0 054 143 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

In technischen Prozessen, bei denen Eisen oder Eisen enthaltende Metalle mit wäßrigen Systemen in Berührung kommen, stellt sich das Problem der Korrosion. Besonders gravierend sind diese Probleme, wenn das wäßrige System auf Salzwasser beruht, wie es normalerweise in zahlreichen Erdölgewinnungs- und Verarbeitungsprozessen vorkommt.

Nach dem Vorschlag der FR-A-2 427 400 sollen Aminsalze sekundärer oder tertiärer Monoamide der homologen Reihe der Dicarbonsäuren mit 3 bis 10 Kohlenstoffatomen als Rost verhinderndes Mittel für wäßrige Systeme verwendet werden. Als Aminkomponente für die Salzbildung soll dabei hauptsächlich Triethanolamin eingesetzt werden. Diese Verbindungen weisen aber, besonders im Hinblick auf ihre Verwendung in Wasser-in-Öl-Emulsionen noch einige Mängel auf.

Aus der DE-OS 24 37 920 sind en-Addukte des Maleinsäureanhydrids an längerkettige ungesättigte Fettsäuren bekannt, die als Korrosionsinhibitoren für Salzwasser-in-Öl-Emulsionen Verwendung finden. Diese Stoffe sind aber in manchen Fällen noch nicht genügend wirksam.

Aus der DE-AS 1 149 843 sind Aminsalze von Amidsäuren bekannt, die man durch Umsetzung von beispielsweise Maleinsäureanhydrid mit Alkylaminen, die 4 bis 30 C-Atome pro Alkylgruppe enthalten, und anschließende Neutralisation mit derartigen Aminen erhält, und die u. a. als Rostschutzmittel wirken — auch in Gegenwart von Seewasser.

Diese Mittel sind aber entweder überhaupt nicht oder — falls sie in Form niederer Aminsalze vorliegen — nur sehr schwer wasserlöslich, was ihren Einsatz bei später zu spaltenden Wasser-in-Öl-Emulsionen entgegensteht, weil diese Stoffe sich dann nur in der Ölphase befinden, und das Salzwasser demzufolge das Eisen, welches die Leitungen und Behälter zumindest enthalten, ungehindert angreifen kann.

Das Ziel der Erfindung bestand darin, solche Stoffe aufzufinden, die als Korrosionsinhibitoren auch in solchen Systemen wirksam sind, die bei der Förderung, Aufarbeitung, Transport und Lagerung von Petroleum mit Eisen oder Eisen enthaltenden Systemen in Kontakt kommen, d. h. sie müssen sowohl in der Öl- als auch in der Wasserphase löslich bzw. verteilbar sein, um das korrosionsanfällige Gut gleichmäßig zu schützen.

Ein weiteres Ziel bestand darin, solche Korrosionsinhibitoren aufzufinden, die auch in konzentrierteren Salzlösungen zumindest kolloiddispers verteilt sind.

Dieses Ziel wurde mit der Verwendung von Salzen von Maleinamidsäuren der Formel I

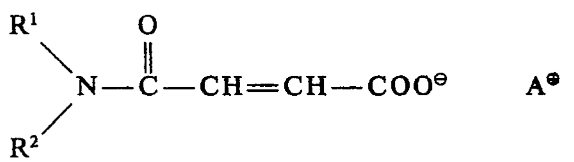

(I)

in der $R^1$ einen $C_7$- bis $C_{20}$-Alkylrest, $R^2$ Wasserstoff oder $R^1$ und $A^{\oplus}$ den protonierten Rest eines Amins der Formel II bedeutet

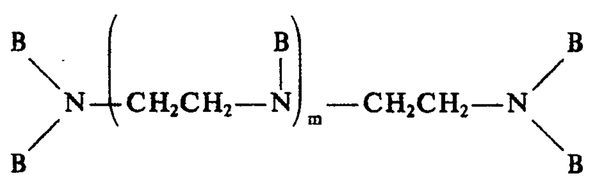

(II)

in der B für Wasserstoff oder den Rest $(C_2H_4O)_xH$, wobei x 1 bis 3 bedeutet, mit der Maßgabe steht, daß die Gesamtzahl der $C_2H_4O$-Gruppierungen im Molekül 3 bis 18 beträgt, und m für 1 oder 2 stehen, erreicht.

Ähnlich aufgebaute Salze, nämlich Alkanolaminsalze spezieller definierter Maleinamidsäuren, d. h. Stoffe, die auf einfach oder mehrfach äthoxyliertem Ammoniak beruhen, sind aus der DE-OS 2 758 123 bekannt. Sie werden in technischen Reinigungs- und Kühlprozessen, bei denen es neben der Korrosionsschutzwirkung auch auf starke Schaumarmut ankommt, als Korrosionsinhibitoren eingesetzt. Für Erdölprozesse eignen sie sich aber weniger, da diese Stoffe in der Ölphase schlecht löslich sind.

Die den Salzen zugrunde liegenden Maleinamidsäuren gehorchen der Formel Ia

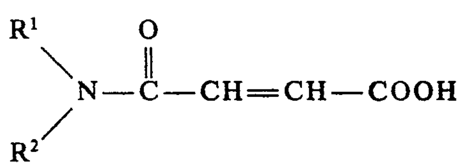

(Ia)

wobei $R^1$ und $R^2$ gemäß Formel I definiert sind.

Bevorzugter Vertreter sind Verbindungen der Formel Ia, in der $R^2$ Wasserstoff bedeutet, und von

diesen hinwiederum solche, bei denen sich die Amidsäure z. B. von $C_{10}$- bis $C_{18}$-primären Alkylaminen herleiten. Technisch von besonderem Interesse sind Maleinamidsäuren, wie Maleinoctyl-, -decyl, -dodecyl-, -tridecyl- und/oder -octadecylamidsäure, die geradkettige oder verzweigte Alkylreste gebunden enthalten. Diese Maleinamidsäuren können auch als Gemisch vorliegen. Es können sich die den Amidkomponenten zugrundeliegenden Amine beispielsweise auch von $C_9$- bis $C_{11}$- oder $C_{13}$- bis $C_{15}$- oder $C_{17}$- bis $C_{19}$-Oxoalkoholgemischen herleiten.

Salzkomponente der Maleinamidsäuren sind die äthoxylierten Polyalkylenpolyamine, wie sie gemäß Formel II definiert sind.

In dieser Formel steht m für 1 oder 2, d. h. die Grundkörper sind Diäthylentriamin, Triäthylentetramin oder Gemische davon. Höhere oder niedrige Polyalkylenpolyamine zeigen bereits einen Wirkungsabfall.

Bevorzugt sind Verbindungen mit 5 bis 10 Äthoxylgruppen im Aminkation, da sie dann verbunden mit der Maleinamidsäure die erfindungszielgerechten Löslichkeitseigenschaften am besten zeigen.

Die erfindungsgemäßen Salze können in sämtlichen Systemen, die auf Erdöl(Salz)wasseremulsionen beruhen, eingesetzt werden. Gut wirksam sind sie z. B. bei Erdölemulsionsspaltprozessen und beim Transport derartiger Rohölemulsionen. Auch das bei Spaltprozessen abgetrennte Salzwasser, das ebenfalls durch Eisen enthaltende Leitungen abtransportiert wird, wird bezüglich seines korrosiven Angriffs durch den Zusatz der erfindungsgemäß zu verwendenden Salze gehemmt.

Die Salze werden den W/O-Emulsionen in Mengen von 50 bis 500 ppm zugesetzt.

Die nun folgenden Beispiele erläutern die Erfindung.

Es wurden folgende Verbindungen eingesetzt:

1) Maleiniso-tridecylamidsäure als Salz des 5fach ethoxylierten Diethylentriamins,
2) Maleiniso-tridecylamidsäure als Salz des 10fach ethoxylierten Diethylentriamins,
3) Vergleich: Maleiniso-tridecylamidsäure-triethanolaminsalz (gemäß DE-OS 2 758 123).

## Beispiel 1

Eine 5%ige wäßrige Lösung von 1) wurde in wechselnden Mengen a) einem Gemisch aus Testbenzin, 3%iger NaCl-Lösung unter $CO_2$-Atmosphäre zugesetzt. In diese Gemische wurden Stahlbleche (C-Stahl) eingebracht und 21 Tage sich selbst überlassen und anschließend der korrosive Abtrag bestimmt. Angegeben wird der Abtrag in Prozenten des Blindwerts.

## Beispiel 2

Es wurde dieselbe Mischung getestet, jedoch unter $H_2S$-Atmosphäre.

## Beispiel 3

Hier wurde eine Salzwasser-in-Öl-Emulsion (Rohöl Reitbrook) eingesetzt und ansonsten gemäß Beispiel 1 verfahren.

Die Ergebnisse sind aus folgender Tabelle ersichtlich:

Tabelle

| Korrosions-Inhibitor | Korrosiver Abtrag Beispiel 1 Einsatzmenge 250 ppm Blindprobe 85 mg | 350 ppm | 400 ppm | Beispiel 2 350 ppm 100 mg | Beispiel 3 350 ppm 27 mg |
|---|---|---|---|---|---|
| 1 | 64% | 60% | 53% | 43% | 39% |
| 2 | 60% | 56% | 53% | 40% | 37% |
| 3 (Vergleich) | 70% | 68% | 66% | 62% | 46% |

**Patentanspruch**

Verwendung von Salzen der Formel I

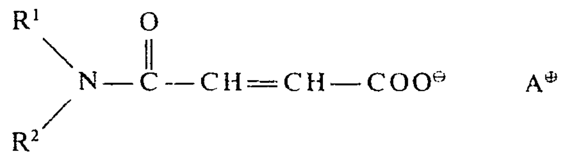 (I)

in der $R^1$ einen $C_7$- bis $_{20}$-Alkylrest, $R^2$ Wasserstoff oder $R^1$ und $A^\oplus$ den protonierten Rest eines Amins der Formel II bedeutet

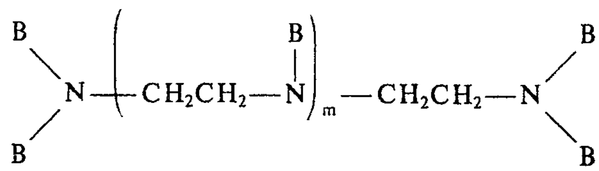 (II)

in der B für Wasserstoff oder den Rest $(C_2H_4O)_xH$, wobei x 1 bis 3 bedeutet, mit der Maßgabe steht, daß die Gesamtzahl der $C_2H_4O$-Gruppierungen im Molekül 3 bis 18 beträgt, und m für 1 oder 2 stehen, als Korrosionsinhibitoren in Wasser-in-Öl-Emulsionen.

**Claim**

The use of a salt of the formula I

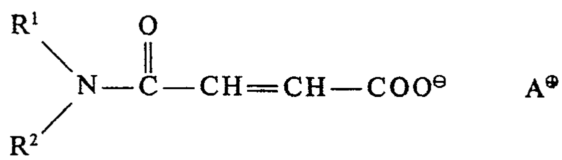 (I)

where $R^1$ is alkyl of 7 to 20 carbon atoms, $R^2$ is hydrogen or has the same meaning as $R^1$, and $A^\oplus$ is a protonated radical of an amine of the formula II

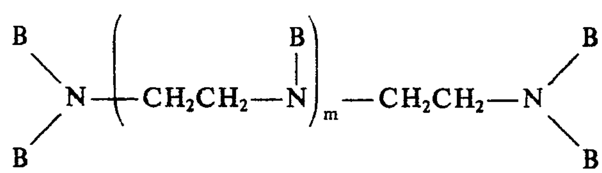 (II)

where B is hydrogen or $(C_2H_4O)_xH$, where x is 1,2 or 3, with the proviso that the total number of $C_2H_4O$ groups in the molecule is from 3 to 18, and m is 1 or 2, as a corrosion inhibitor in water-in-oil emulsions.

**Revendication**

Utilisation de sels de formule I

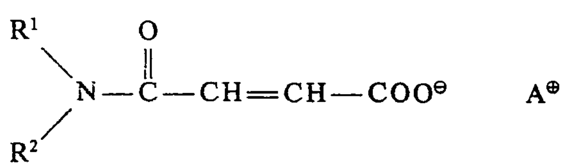 (I)

dans laquelle $R^1$ représente un radical alcoyle en $C_7$ à $C_{20}$, $R^2$ un hydrogène ou $R^1$ et $A^\oplus$ le radical

protoné d'une amine de formule II

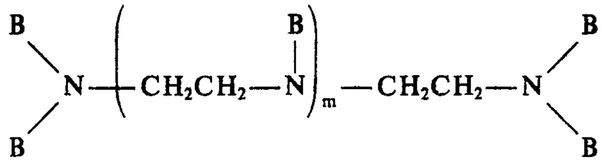

(II)

dans laquelle B est mis pour un hydrogène ou le radical $(C_2H_4O)_xH$, x étant un nombre de là 3, avec cette condition que le nombre total des groupements $C_2H_4O$ dans la molécule se situe entre 3 et 18, et m est mis pour 1 ou 2, en tant qu'inhibiteurs de corrosion dans des émulsions eau-dans-huile.